(19) Europäisches Patentamt
European Patent Office
Office européen des brevets

(11) **EP 2 504 541 B1**

(12) **EUROPÄISCHE PATENTSCHRIFT**

(45) Veröffentlichungstag und Bekanntmachung des Hinweises auf die Patenterteilung:
**27.05.2015 Patentblatt 2015/22**

(21) Anmeldenummer: **10781479.0**

(22) Anmeldetag: **12.11.2010**

(51) Int Cl.:
**F01N 3/28** (2006.01)

(86) Internationale Anmeldenummer:
**PCT/EP2010/067370**

(87) Internationale Veröffentlichungsnummer:
**WO 2011/064109 (03.06.2011 Gazette 2011/22)**

(54) **ABGASREINIGUNGSKOMPONENTE MIT UMLENKFLÄCHE UND VERFAHREN ZU DEREN HERSTELLUNG**

EXHAUST GAS CLEANING COMPONENT HAVING A DEFLECTION SURFACE AND METHOD FOR PRODUCTION THEREOF

ELÉMENT D'ÉPURATION DES GAZ D'ÉCHAPPEMENT COMPORTANT UNE SURFACE DE DÉVIATION ET PROCÉDÉ DE FABRICATION DUDIT ÉLÉMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2009 DE 102009056183**

(43) Veröffentlichungstag der Anmeldung:
**03.10.2012 Patentblatt 2012/40**

(73) Patentinhaber: **Emitec Gesellschaft für Emissionstechnologie mbH**
**53797 Lohmar (DE)**

(72) Erfinder: **BRÜCK, Rolf**
**51429 Bergisch Gladbach (DE)**

(74) Vertreter: **Rössler, Matthias**
**KNH Patentanwälte Kahlhöfer Neumann**
**Rößler Heine PartG mbB**
**Postfach 10 33 63**
**40024 Düsseldorf (DE)**

(56) Entgegenhaltungen:
**WO-A1-2005/001252      DE-A1- 19 518 536**
**DE-A1- 19 955 013**

**Beschreibung**

Gegenstand der Erfindung ist ein Verfahren zur Herstellung einer Abgasreinigungskomponente, insbesondere eines im Gegenstrom betriebenen kompakten Katalysators, aufweisend eine Umlenkfläche zur Umlenkung einer mit einer Hinströmrichtung fließenden Abgasströmung in eine Rückströmrichtung.

Aufgrund des stetig steigenden Automobilverkehrs und der stetig strenger werdenden Abgasnormen ist es für Kraftfahrzeuge mit Verbrennungskraftmaschinen wichtig, dass die Abgase der Verbrennungskraftmaschinen effizient gereinigt werden. Dazu sind aus dem Stand der Technik Abgasreinigungssysteme bekannt, bei welchen das Abgas der Verbrennungskraftmaschine an einer katalytisch wirksamen Oberfläche vorbeigeführt wird und Schadstoffe im Abgas, wie Stickstoffoxidverbindungen, Rußpartikel oder Kohlenmonoxid, unter Beihilfe eines an dieser Oberfläche angelagerten Katalysators zu unschädlichen Substanzen, wie Stickstoff, Wasser und $CO_2$, umgesetzt werden. Für die effiziente Umsetzung von Abgasen sind regelmäßig verhältnismäßig hohe Abgastemperaturen erforderlich. Die Abgastemperaturen der Abgase einer Verbrennungskraftmaschine sind regelmäßig direkt nachdem die Abgase die Verbrennungskraftmaschine verlassen haben am höchsten, so dass hier in der Nähe der Verbrennungskraftmaschine im Motorraum eines Kraftfahrzeuges ein günstigster Ort wäre, ein Abgasreinigungssystem anzuordnen. Allerdings ist der Bauraum in Motornähe bei Kraftfahrzeugen regelmäßig sehr begrenzt. Herkömmliche Abgassysteme sind deswegen regelmäßig im Unterboden des Kraftfahrzeuges angeordnet, wo erheblich mehr Platz zur Verfügung steht.

Um den begrenzten Bauraum im Motorraum trotzdem für Abgasreinigungssysteme nutzen zu können, sind besonders kompakte Abgasreinigungskomponenten mit konzentrischer Durchströmung entwickelt worden, welche beispielsweise aus der WO 05/001252 A1 bekannt sind. Bei einem solchen Abgassystem durchströmt das Abgas zunächst einen Hinströmbereich, wird dann umgelenkt und strömt durch einen Rückströmbereich zumindest teilweise zurück. Der Rückströmbereich ist dabei konzentrisch um den Hinströmbereich herum angeordnet, so dass ein effizienter Wärmeaustausch zwischen Hinströmbereich und Rückströmbereich erfolgt. Die an den Katalysatoroberflächen eines Abgassystems ablaufenden katalytischen Reaktionen sind meist auch exotherm. Aus diesem Grund wird das Abgas in einem Abgassystem erwärmt und die rückströmenden Abgase sind regelmäßig wärmer als die hinströmenden Abgase. Durch den effizienten Wärmeaustausch zwischen Hinströmung und Rückströmung kann so die Abgastemperatur im Abgassystem erhöht beziehungsweise hoch gehalten werden, so dass eine besonders effiziente Umsetzung erfolgt. Gleichzeitig wird durch die Aufteilung des Abgassystems in Hinströmbereich, Umlenkung und Rückströmbereich eine besonders kompakte Anordnung des Abgassystems erreicht, so dass die Anordnung des Systems im Motorraum bzw. in der Nähe der Verbrennungskraftmaschine eines Kraftfahrzeuges erfolgen kann.

Aus der DE 195 18 536 A1 ist eine Abgasreinigungskomponente bekannt, bei der das Abgas dezentral ein- und/oder ausströmt und dabei im Wesentlichen mit gleichbleibender Strömungsrichtung parallel versetzt wird. Zur Vergleichmäßigung der Strömung über den Querschnitt in der Abgasreinigungskomponente ist eine Strömungserschwerungsvorrichtung vorgesehen.

Bei derartigen kompakten Katalysatoranordnungen hat sich herausgestellt, dass zumeist sehr verwinkelte Strömungsführungen am Einlass erforderlich sind, um dem verfügbaren Bauraum im Bereich des Motors zu folgen. Damit ist die Strömung innerhalb derartiger Abgassysteme regelmäßig nicht gleichmäßig ausgebildet, was zu einer ineffizienten Nutzung der dort bereitgestellten katalytischen Oberfläche führt. Aus diesem Grunde müssen die Abgassysteme häufig größer dimensioniert werden als dies bei gleichmäßiger Durchströmung und effizienter Nutzung der katalytisch wirksamen Oberfläche erforderlich wäre. Darüber hinaus ist auch die ineffiziente Nutzung des katalytischen Materials auf den katalytisch aktiven Oberflächen von Nachteil, weil dies regelmäßig teure Edelmetalle beinhaltet und die Menge dieser Edelmetalle in Abgasbehandlungskomponenten möglichst gering sein sollte, um Kosten zu sparen.

Hiervon ausgehend ist es Aufgabe der hier vorliegenden Erfindung, die im Zusammenhang mit dem Stand der Technik geschilderten technischen Probleme weiter zu lindern. Es soll insbesondere ein besonders vorteilhaftes Verfahren zur Herstellung einer Abgasreinigungskomponente, die die hier geschilderten Probleme zumindest teilweise löst, vorgestellt werden. Außerdem soll eine besonders vorteilhafte Abgasreinigungskomponente vorgestellt werden. Darüber hinaus soll der Bereich zwischen Motor und der ersten Abgasreinigungskomponente möglichst kurz sein und ein Abbau der turbulenten Strömung vermieden werden, um eine hohe katalytische Aktivität der motornah positionierten Katalysatoranordnung zu gewährleisten. Ebenso soll erreicht werden, dass das Abgas möglichst gleichmäßig auch Randbereiche der Katalysatoranordnung anströmt, insbesondere für ringförmig ausgebildete katalytische Konverter, die in einem Rückströmbereich angeordnet sind.

Diese Aufgaben werden gelöst mit einem Verfahren gemäß den Merkmalen des Patentanspruchs 1 und einer Abgasreinigungskomponente mit den Merkmalen des Patentanspruchs 5. Weitere vorteilhafte Ausgestaltungen der Erfindung sind in den abhängig formulierten Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Erfindungsgemäß wird ein Verfahren zur Herstellung einer Abgasreinigungskomponente, aufweisend eine Trägerstruktur mit einer Einströmseite, einer Abströmseite und einer vorgegebenen Durchströmungsrichtung sowie einer der Abströmseite gegenüberliegend angeordneten Umlenkfläche, aufweisend zumindest die folgenden Schritte vorgeschlagen:

     a) Bereitstellen der Trägerstruktur;

     b) Beaufschlagen der Trägerstruktur mit einem von der Einströmseite zur Abströmseite mit der vorgegebenen Durchströmungsrichtung strömenden Abgas;

     c) Ermitteln einer Verteilung der Strömungsgeschwindigkeiten an der Abströmseite der Trägerstruktur; und

     d) Gestalten der Form der Umlenkfläche mit mindestens einem Rückstauelement in Abhängigkeit der Verteilung der Strömungsgeschwindigkeiten an der Abströmseite, so dass die Verteilung der Strömungsgeschwindigkeiten vergleichmäßigt wird.

Durch das erfindungsgemäße Verfahren wird es möglich, eine Abgasreinigungskomponente derart auszugestalten, dass eine Vergleichmäßigung der durch die Abgasreinigungskomponente strömenden Abgasströmung erreicht wird. Der Rückströmbereich wird konzentrisch außen um den Hinströmbereich herum angeordnet, so dass der aus dem Stand der Technik geschilderte effiziente Wärmeübergang von Rückströmbereich hin zum Hinströmbereich erfolgen kann.

Die Abgasreinigungskomponente weist eine Zuleitung mit einer Hauptrichtung auf, und die Hauptrichtung (17) und die vorgegebene Durchströmungsrichtung (6) sind in einem Winkel (14) zueinander angeordnet.

Im Folgenden sollen die Schritte des erfindungsgemäßen Verfahrens im Detail und in bevorzugten Ausprägungen erläutert werden.

In Schritt a) wird die Trägerstruktur der Abgasreinigungskomponente regelmäßig ohne die in Strömungsrichtung hinter der Trägerstruktur angeordneten Komponenten des Abgassystems bereitgestellt (freie bzw. unbehinderte Abströmung bzw. reine Umlenkung des abgeströmten Abgases). Somit kann in Schritt a) eine unvollständige Abgasreinigungskomponente bereitgestellt werden, die alle Komponenten beinhaltet, die in Strömungsrichtung vor der Trägerstruktur im fertigen Abgassystem vorhanden sind, jedoch nicht die nach der Trägerstruktur angeordneten Komponenten.

Die derartig bereitgestellte Trägerstruktur wird in Schritt b) mit einer Abgasströmung beaufschlagt. Im Rahmen des Verfahrens zur Herstellung der Abgasreinigungskomponente ist es hier regelmäßig vorteilhaft, eine Abgasreinigungsströmung mit bestimmten Eigenschaften (Abgasmassenstrom, Temperatur und Beladung mit Schadstoffen) bereitzustellen, die den im späteren Betrieb der Abgasreinigungskomponente am häufigsten auftretenden Abgasströmungsbedingungen und/oder üblichen Abgastests entspricht. So kann die Abgasreinigungskomponente für genau eine derartige besonders häufig auftretende Abgasströmung angepasst werden und ist im Betrieb deshalb besonders effizient.

Die bereitgestellte Abgasströmung kann beispielsweise der Abgasströmung bei bestimmten Betriebsbedingungen eines Kraftfahrzeuges entsprechen. Derartige bestimmte Betriebsbedingungen können beispielsweise über die Fahrzeuggeschwindigkeit, die Drehzahl der Antriebsmaschine und/oder das Drehmoment der Antriebsmaschine festgelegt sein. Derartigen bestimmten Betriebsbedingungen sind regelmäßig bestimmte Eigenschaften der Abgase (Abgasmassenstrom, Temperatur und Beladung mit Schadstoffen) zugeordnet.

Es ist auch möglich, dass in Schritt b) nicht nur eine Abgasströmung mit bestimmten Eigenschaften bereitgestellt wird, sondern mehrere verschiedene Abgasströmungen. Es können beispielsweise Abgasströmungsbedingungen bereitgestellt werden, wie sie bei üblichen Tests zur Bestimmung des Kraftstoffverbrauches und des Schadstoffausstoßes von Kraftfahrzeugen entstehen. Beispielsweise kann hier der europäische NEDC-Test (New European Driving Cycle bzw. Neuer Europäischer Fahrzyklus) oder der amerikanische FTP-Test (Federal Test Procedure) angewandt werden. Für den NEDC-Test fährt ein Kraftfahrzeug auf einem Rollenprüfstand einen genormten Fahrzyklus ab, der aus einem simulierten Anteil Stadtverkehr und einem simulierten Anteil Überlandverkehr besteht. Roll- und Luftwiderstand des Kraftfahrzeuges werden hierzu zuvor exakt ermittelt. Der FTP-Test bildet eine reale Fahrt mit einem Kraftfahrzeug ab. Beide Tests sind den Fachleuten auf diesem technischen Gebiet bekannt. Schritt a) und b) dienen insbesondere dazu, das Einströmverhalten und/oder das Durchströmungsverhalten der Trägerstruktur zu bestimmen.

Schritt b) kann in einem geeigneten Testaufbau durchgeführt werden, in welchem Mittel zur Bereitstellung der benötigten Abgasströmung und gleichzeitig Messmittel zur Überwachung der Abgasströmung zur Verfügung stehen.

In Schritt c) wird eine Verteilung der Strömungsgeschwindigkeiten an der Abströmseite der Trägerstruktur ermittelt. Bei der Verteilung der Strömungsgeschwindigkeiten handelt es sich um eine flächige Funktion, die angibt, an welcher Stelle der Abströmseite die aus der Trägerstruktur austretende Abgasströmung welche Geschwindigkeit aufweist. Eine derartige Verteilung der Strömungsgeschwindigkeiten kann beispielsweise bestimmt werden, indem an verschiedenen Stellen in einer Fläche lokale Strömungsgeschwindigkeiten der Abgasströmung gemessen bzw. berechnet werden. Dies erfolgt normalerweise an diskreten Messpunkten, die beispielsweise an den Knotenpunkten eines Netzes mit quadratischen Netzzellen angeordnet sein können. Die Messpunkte sind dann als Messraster aufgebaut. Um eine hohe Qualität der Messung zu erhalten, ist es vorteilhaft, wenn das Messraster symmetrisch zum Querschnitt der Trägerstruktur ausgerichtet ist. Um die Qualität der Messung der Verteilung der Strömungsgeschwindigkeiten zu erhöhen, kann die Anzahl der Messpunkte erhöht werden. Zusätzlich kann für jeden Messpunkt auch der Gradient der Strömungsgeschwindigkeit zu den umgebenden Messpunkten berücksichtigt werden.

Wenn in Schritt b) bereits mehrere verschiedene Abgasströmungen bereitgestellt wurden, können in Schritt c) auch mehrere Verteilungen der (bei unterschiedlichen Lastzuständen generierten) Strömungsgeschwindigkeiten ermittelt werden. Zur Fortsetzung des erfindungsgemäßen Verfahrens kann aus diesen Strömungsgeschwindigkeiten dann auch eine mittlere Verteilung der Strömungsgeschwindigkeiten bestimmt werden, in die die einzelnen ermittelten Verteilungen der Strömungsgeschwindigkeiten, nach der Häufigkeit und Dauer ihres Auftretens gewichtet, einfließen.

Anschließend wird in Schritt d) die Form der Umlenkfläche, die das aus der Trägerstruktur ausströmende Abgas umlenkt, in Abhängigkeit der Verteilung der Strömungsgeschwindigkeiten gestaltet. Die Verteilung der Strömungsgeschwindigkeiten ist regelmäßig ungleichmäßig über alle beliebigen Querschnitte durch die Trägerstruktur bzw. über die Abströmseite der Trägerstruktur. In bestimmten Bereichen ist die Strömungsgeschwindigkeit gegenüber anderen Bereichen deutlich erhöht. Dadurch, dass die Umlenkfläche, die der Abströmseite der Trägerstruktur gegenüberliegt, mit Rückstauelementen entsprechend gestaltet wird, kann eine Vergleichmäßigung der Strömungsgeschwindigkeiten an der Abströmseite und damit auch teilweise in der Trägerstruktur sowie nach der Umlenkung erreicht werden. Nach der Umlenkung kann beispielsweise ein konzentrisch zur Trägerstruktur angeordneter Rückströmbereich mit weiteren Trägerstrukturen oder Wabenkörpern vorgesehen sein. Eine geeignet ausgestaltete Umlenkfläche, die beispielsweise lokal besonders nah an die Abströmseite der Trägerstruktur heranreicht, kann ein Rückstauelement bzw. Gegendruckelement für die Abgasströmung zwischen Trägerstruktur und Umlenkfläche ausbilden. Bei der Durchströmung der Trägerstruktur mit Abgas ergibt sich durch dieses Rückstauelement und/oder Gegendruckelement eine Art Gegendruckpolster und/oder der Strömungswiderstand wird hierdurch bereichsweise erhöht.

Es hat sich überraschenderweise herausgestellt, dass es für den Gesamtströmungswiderstand einer Abgasreinigungskomponente von Vorteil ist, wenn bereichsweise durch eine Ausgestaltung der Umlenkfläche der Gegendruck erhöht wird. So können insbesondere die eingangs angeführten Probleme reduziert werden.

In Schritt d) wird der Abstand von Umlenkfläche und Abströmseite zueinander in Bereichen erhöhter Strömungsgeschwindigkeit auf weniger als 30 mm reduziert. Vorzugsweise wird der Abstand sogar auf weniger als 20 mm reduziert. Mit Bereichen erhöhter Strömungsgeschwindigkeit sind hier Bereiche erhöhter Strömungsgeschwindigkeit bei der ungestörten Verteilung der Strömungsgeschwindigkeiten gemeint, die in Schritt c) ermittelt wird, wenn also keine die Strömung an der Abströmseite beeinflussende Umlenkfläche vorliegt. Es hat sich herausgestellt, dass ein Abstand von weniger als 30 mm zwischen Umlenkfläche und Abströmseite sinnvoll ist, um ein Gegendruckpolster zwischen Umlenkfläche und Abströmseite auszubilden, welches zu einer signifikanten Umverteilung der Strömung führt.

In Schritt d) wird die Umlenkfläche zumindest mit einer dezentralen und/oder multiplen Delle ausgestaltet.

Auch vorteilhaft ist das Verfahren, wenn in Schritt d) die Umlenkfläche derart ausgestaltet wird, dass eine die Abgasreinigungskomponente mit darin angeordneter Umlenkfläche durchströmende Abgasströmung einen Gleichmass-Index (uniformity-index) von grösser als 0,8 aufweist. Der Gleichmass-Index (uniformity-index) wird unten erläutert.

Auch vorteilhaft ist das Verfahren, wenn die Form der Umlenkfläche in Schritt d) bereichsweise im Wesentlichen spiegelbildlich zur Form der Verteilung der Strömungsgeschwindigkeiten ausgestaltet wird. Hiermit ist insbesondere gemeint, dass in Bereichen erhöhter Strömungsgeschwindigkeit die Umlenkfläche besonders nah an die Abströmseite der Trägerstruktur heranrückt, während sie in Bereichen geringerer Strömungsgeschwindigkeit weiter von der Abströmseite der Umlenkfläche entfernt ist. Bei der Umlenkfläche ist zudem zu berücksichtigen, dass diese regelmäßig neben der Funktion, die Strömung zu vergleichmäßigen, dann nach wie vor die Funktion hat, die Abgasströmung umzulenken. Deshalb ist es vorteilhaft, wenn die Gestaltung der Form der Umlenkfläche zur Vergleichmäßigung der Strömung nur bereichsweise erfolgt. In anderen Bereichen, in denen die Ausbildung eines Druckpolsters zur Vergleichmäßigung der Strömung nicht erforderlich ist, wird die Ausgestaltung der Form der Umlenkfläche von der Aufgabe, die Strömung umzulenken, dominiert.

Auch vorteilhaft ist das Verfahren, wenn die Einströmseite der Trägerstruktur in Schritt b) zumindest teilweise unter einem Winkel schräg zur vorgegebenen Durchströmungsrichtung angeströmt wird. Es können auch mehrere Teilströme mit unterschiedlichen Winkeln zur Durchströmungsrichtung der Trägerstruktur die Trägerstruktur anströmen. Ein Winkel einer Anströmung kann beispielsweise zumindest 10° [Grad], vorzugsweise zumindest 20° [Grad] und besonders bevorzugt zumindest 30° [Grad] betragen. Damit wird insbesondere eine asymmetrische Anströmung realisiert, die mittels der folgenden Umlenkfläche vergleichmäßigt wird. Hier liegt ein bevorzugtes Anwendungsgebiet der Erfindung.

Bei den nach dem erfindungsgemäßen Verfahren hergestellten Abgasreinigungskomponenten ist es regelmäßig erforderlich, dass diese besonders platzsparend im Motorraum einer Verbrennungskraftmaschine angeordnet werden können. Deshalb ist es häufig der Fall, dass die Abgasströmung schräg (also unter einem Winkel) in derartige Abgasreinigungskomponenten einströmt. Gerade bei einer Anströmung unter einem Winkel ergibt sich an der Abströmseite einer Trägerstruktur regelmäßig eine ungleichmäßige Verteilung der Strömungsgeschwindigkeiten. Diese kann durch eine Herstellung einer Abgasreinigungskomponente nach dem erfindungsgemäßen Verfahren besonders effizient und effektiv ausgeglichen werden.

Im Rahmen der Erfindung wird auch eine Abgasreinigungskomponente vorgeschlagen, welche eine Trägerstruktur mit einer Einströmseite, einer Abströmseite und einer Durchströmungsrichtung sowie eine der Abströmseite gegenüberliegend angeordneten Umlenkfläche hat, wobei die Umlenkfläche derart ausgestaltet ist, dass eine die Abgasreinigungskomponente mit darin angeordneter Umlenkfläche durchströmende Abgasströmung einen Gleichmaß-Index ("*uniformity-index*") von größer als 0,8 aufweist. Besonders bevorzugt ist, dass die Abgasströmung einen Gleichmaß-Index von größer als 0,9 aufweist.

Eine derartige Abgasreinigungskomponente kann beispielsweise nach dem erfindungsgemäßen Verfahren hergestellt sein. Mit dem Gleichmaß-Index wird die Einheitlichkeit einer Strömungsverteilung angegeben. Der Gleichmaß-Index bestimmt sich im Wesentlichen über ein Integral der Verteilung der Strömungsgeschwindigkeiten über die Abströmseite, welches mit einer mittleren Strömungsgeschwindigkeit normiert wird. Die Bestimmung des Gleichmaß-Index erfolgt über folgende Formel aus einer Verteilung der Strömungsgeschwindigkeiten:

Zur Bestimmung des Gleichmaß-Index wird in einer Fläche die lokale Strömungsgeschwindigkeit $[w_i]$ an einer Vielzahl von Messpunkten (Anzahl entspricht Index i) bestimmt. Bevorzugt sind die Messpunkte über die Fläche (z. B. durchströmbare Querschnittsfläche parallel zur Abströmseite der Abgasreinigungskomponente) gleichmäßig verteilt. Beispielsweise können die Messpunkte jeweils die Knotenpunkte eines gedachten Netzes mit quadratischen Netzzellen sein. Aus dieser Vielzahl von lokalen Geschwindigkeiten der Strömung wird eine mittlere Strömungsgeschwindigkeit $[\overline{w}]$ berechnet. Mit folgender Formel wird für jeden Messpunkt aus lokaler Strömungsgeschwindigkeit $[w_i]$ und mittlerer Strömungsgeschwindigkeit $[\overline{w}]$ ein lokaler Ungleichmaß-Index $[\omega_i]$ bestimmt:

$$\omega_i = \frac{w_i - \overline{w}}{\overline{w}}$$

Für alle Messpunkte kann jetzt ein globaler Ungleichmaß-Index $[\overline{\omega}]$ als Mittelwert der lokalen Ungleichmaß-Indexe $[\omega_i]$ berechnet werden. Aus diesem globalen Ungleichmaß-Index $[\overline{\omega}]$ berechnet sich der Gleichmaß-Index $[\gamma]$ (*uniformity-index*) nach folgender Formel:

$$\gamma = 1 - \frac{\overline{\omega}}{2}$$

Ein Gleichmaß-Index von 1.0 entspricht einer absolut gleichmäßigen Strömungsverteilung. Mit Hilfe des weiter oben bereits angegebenen Verfahrens zur Bestimmung der Verteilung der Strömungsgeschwindigkeiten kann überprüft werden, ob ein derartiger Gleichmaß-Index vorliegt. Zur Feststellung des vorliegenden Gleichmaß-Index wird regelmäßig eine Abgasströmung mit definierten Eigenschaften verwendet. Diese Eigenschaften umfassen beispielsweise den Abgasmassenstrom pro Querschnitt, die Abgastemperatur und die Beladung des Abgases mit Schadstoffen.

Der Gleichmaß-Index kann auch für verschiedene Abgasströmungen bestimmt werden. Beispielsweise können verschiedene Abgasströmungen, die in einem typischen Testzyklus eines Kraftfahrzeuges (NEDC-Test oder FTP-Test) auftreten, berücksichtigt werden. Es kann dann die Anforderung gestellt werden, dass der Gleichmaß-Index niemals, im Mittel und/oder für einen bestimmten Prozentsatz der Betriebszeit, beispielsweise 80 %, in einem definierten Wertebereich liegen soll.

Die Umlenkfläche weist zumindest eine dezentrale und/oder multiple Delle auf. Mit "Delle" ist hier ein Bereich gemeint, in welchem der Abstand zwischen Abströmseite und Umlenkfläche verkleinert ist. Eine Delle kann beispielsweise nach Art einer Beule und/oder Ausbuchtung der Umlenkfläche hin zur Abströmseite ausgebildet sein. Mit "dezentral" ist hier insbesondere gemeint, dass die Delle nicht konzentrisch gegenüberliegend zur Trägerstruktur positioniert ist, sondern vorzugsweise außermittig angeordnet ist. Mit "multipler Delle" ist gemeint, dass mehrere einzelne und/oder miteinander verbundene Dellen vorhanden sein können. Unregelmäßige Verteilungen der Durchströmungsgeschwindigkeiten können durch derartige Dellen besonders effektiv ausgeglichen werden. Die genaue Ausgestaltung der Dellen kann das Ergebnis des erfindungsgemäßen Verfahrens sein. Bevorzugt ist, dass der der Abströmseite der Trägerstruktur nächstliegende Punkt der Delle nicht spitz ist, sondern insbesondere ein Plateau, eine Sphäre oder einen Radius bildet. Vorzugsweise verläuft die Umlenkfläche im Bereich der Delle bereichsweise nah entlang der Abströmseite der Trägerstruktur, so dass eine Druckpolsterfläche ausgebildet ist.

Da die Bereitstellung der oben beschriebenen Delle charakteristisch für eine gewünschte Strömungsbeeinflussung des Abgases nach dein Verlassen der Trägerstruktur ist, kann dieses Merkmal (z. B. für den Fall einer gewünscht inhomogenen Strömungsverteilung) auch unabhängig eingesetzt werden. Deshalb wird hier gerade für diese (andere) Zielrichtung auch eine Abgasreinigungskomponente vorgeschlagen, welche eine Trägerstruktur mit einer Einströmseite, einer Abströmseite und einer Durchströmungsrichtung sowie eine der Abströmseite gegenüberliegend angeordneten Umlenkfläche hat, wobei die Umlenkfläche zumindest eine dezentrale und/oder multiple Delle aufweist. Dabei ist die dezentrale und/oder multiple Delle so ausgestaltet, dass sich gerade (nur) durch deren Präsenz ein (beliebig) gewünschtes Strömungsprofil einstellt. Gegebenenfalls kann auch das eingangs beschriebene Verfahren an die andere Zielsetzung angepasst werden, so dass in Schritt d) statt einer "Vergleichmäßigung" eine konkrete "Beeinflussung" bzw. "Einstellung einer vorgegebene Strömungsverteilung" erfolgt. Im Übrigen können alle hier beschriebenen Mittel und Maßnahmen entsprechend kombiniert werden.

Insbesondere ist hierbei auch vorgesehen, dass die Zuleitung des Abgases hin zur Trägerstruktur frei von Einbauten ist, also insbesondere dort keine zusätzlichen, in die Zuleitung hineinragende und/oder von der Wand der Zuleitung beabstandete Strömungsleitflächen vorgesehen sind. Solche Strömungsleitflächen benötigen zusätzlichen Bauraum (insbesondere wenn mehrere Zuleitungen vorgesehen sind) und/oder führen gegebenenfalls zu einer laminaren Abgasströmung, wodurch die katalytische Effektivität der ersten Trägerstruktur reduziert werden kann. Auch stellen solche zusätzlichen Strömungsleitflächen eine Wärmekapazität dar, die dem Abgas gerade in der Aufwärmphase der Katalysatoranordnung Wärme entziehen und damit die Zeit bis zum Erreichen der Anspringtemperatur des Trägerkörpers hinauszögern. Somit kann also erreicht werden, dass der Bereich zwischen der Verbrennungskraftmaschine und des ersten Trägerkörpers möglichst kurz ist und ein Abbau der turbulenten Strömung vermieden wird, um eine hohe katalytische Aktivität des motornah positionierten Trägerkörpers zu gewährleisten.

Zudem sollte die Umlenkfläche auch so gestaltet sein, dass das Abgas möglichst gleichmäßig verteilt in einen (konzentrisch zur ersten Trägerstruktur angeordneten) Rückströmbereich der Abgasreinigungskomponente einströmt. Damit hat die Umlenkfläche neben der Funktion der Strömungsvergleichmäßigung in der stromaufwärts bzw. zuvor durchströmten Trägerstruktur zusätzlich die Funktion der gleichmäßigen Umlenkung des Abgases hin zum stromabwärts bzw. nachträglich durchströmten Rückströmbereich und/oder einem ringförmig ausgebildeten (katalytisch aktiven) Wabenkörpers. Ganz besonders bevorzugt wird dann auch im Rückströmbereich ein Gleichmaß-Index von größer als 0,8 erreicht.

Die Abgasreinigungskomponente weist eine Zuleitung mit einer Hauptrichtung auf und die Hauptrichtung und die vorgegebene Durchströmungsrichtung der Trägerstruktur sind in einem Winkel zueinander angeordnet. Bei einer derartigen Zuleitung tritt regelmäßig eine ungleichmäßige Verteilung der Strömungsgeschwindigkeiten an der Abströmseite der Trägerstruktur auf. Deshalb ist eine erfindungsgemäße Abgasreinigungskomponente bei einer Zuleitung mit einer Hauptrichtung, die unter einem Winkel zur Durchströmungsrichtung der Trägerstruktur angeordnet ist, besonders vorteilhaft.

Auch erfindungsgemäß ist ein Kraftfahrzeug, aufweisend eine Verbrennungskraftmaschine sowie ein Abgassystem zur Reinigung der Abgase der Verbrennungskraftmaschine, wobei das Abgassystem eine erfindungsgemäße Abgasreinigungskomponente oder eine nach dem erfindungsgemäßen Verfahren hergestellte Abgasreinigungskomponente aufweist.

Die für das erfindungsgemäße Verfahren geschilderten Vorteile und besonderen Verfahrensmerkmale sind in analoger Weise auf die erfindungsgemäße Abgasreinigungskomponente übertragbar. Gleiches gilt für die für die erfindungsgemäße Abgasreinigungskomponente geschilderten besonderen Vorteile und Ausgestaltungen, die in analoger Weise auf das erfindungsgemäße Verfahren übertragbar sind.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Auch ist darauf hinzuweisen, dass die Figuren und insbesondere die dargestellten Größenverhältnisse nur schematisch sind. Es zeigen:

Fig. 1:      eine Trägerstruktur mit einer Verteilung der Strömungsgeschwindigkeiten,

Fig. 2:      eine erste Ausführungsvariante einer erfindungsgemäßen Abgasreinigungskomponente,

Fig. 3:      eine zweite Ausführungsvariante einer erfindungsgemäßen Abgasreinigungskomponente, und

Fig. 4:      ein Kraftfahrzeug, welches mit einer erfindungsgemäßen Abgasreinigungskomponente ausgestattet ist.

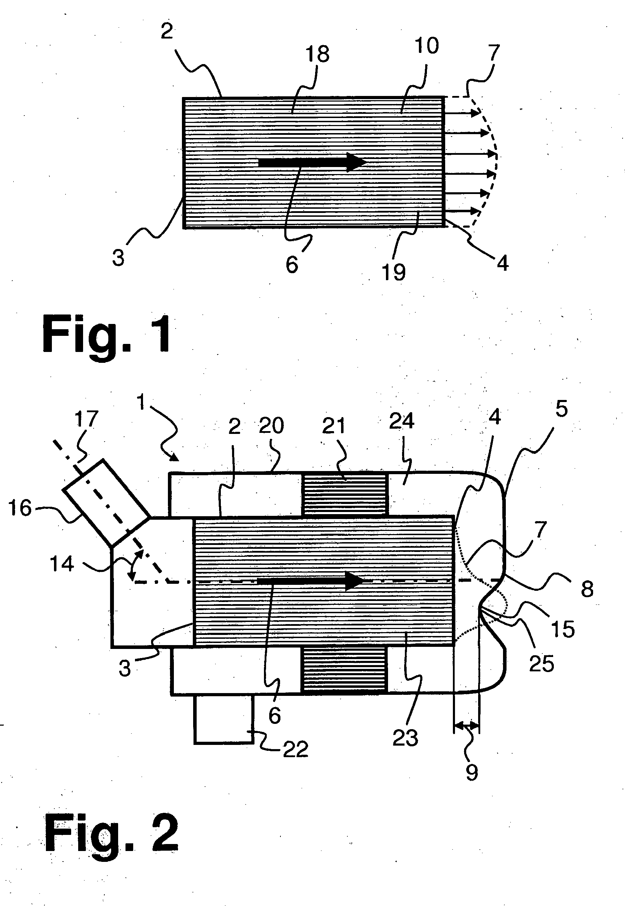

Fig. 1 veranschaulicht, wie sich eine Verteilung der Strömungsgeschwindigkeiten 7 an einer Abströmseite 4 einer Trägerstruktur 2 ausbilden kann. Abgas strömt dabei mit einer Durchströmungsrichtung 6 von einer Einströmseite 3 der Trägerstruktur 2 zur Abströmseite 4 der Trägerstruktur 2. Die Trägerstruktur 2 kann beispielsweise ein aus zumindest einer zumindest teilweise strukturierten Metallfolie 18 gewickelter, gewundener oder gestapelter Wabenkörper sein. Es kann sich aber auch um einen keramischen Wabenkörper handeln. Eine derartige Trägerstruktur weist regelmäßig von der Einströmseite 3 zur Abströmseite 4 verlaufende Kanäle 19 auf, welche die Durchströmungsrichtung 6 durch die Trägerstruktur 2 vorgeben. Hier nicht zeichnerisch dargestellt, jedoch im Sinne der Erfindung möglich ist, dass innerhalb der Trägerstruktur 2 zwischen den einzelnen Kanälen 19 Durchbrüche vorliegen, durch die das Abgas sich innerhalb der Trägerstruktur 2 umverteilen kann und die Verteilung der Strömungsgeschwindigkeiten 7 an der Einströmseite 3 sich von der Verteilung der Strömungsgeschwindigkeiten 7 an der Abströmseite 4 unterscheidet.

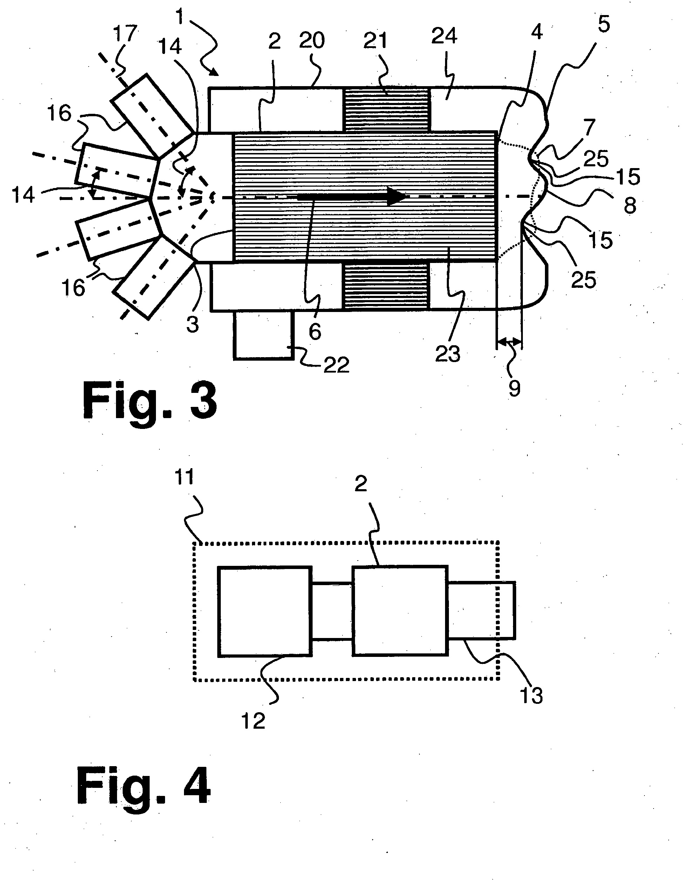

Fig. 2 und Fig. 3 zeigen zwei verschiedene Ausführungsvarianten von erfindungsgemäßen Abgasreinigungskomponenten 1. Die Abgasreinigungskomponenten 1 weisen jeweils ein Gehäuse 20 sowie eine Trägerstruktur 2 mit einer Einströmseite 3 und einer Abströmseite 4 auf. Die Trägerstruktur 2 wird mit einer Durchströmungsrichtung 6 durchströmt. An der Einströmseite 3 sind Zuleitungen 16 eingezeichnet, welche die Zufuhr von Abgas zur Trägerstruktur 2 ermöglichen. Die Zuleitungen 16 weisen jeweils eine Hauptrichtung 17 auf, welche unter einem Winkel 14 schräg zur Durchströmungsrichtung 6 angeordnet ist. Gemäß der Fig. 2 ist eine Zuleitung 16 vorgesehen. Gemäß der Fig. 3 sind vier Zuleitungen 16 vorgesehen. Die Ausführungsvariante der Abgasreinigungskomponente 1 gemäß der Fig. 3 kann beispielsweise direkt an eine Mehrzahl von Abgaskrümmern angeschlossen werden.

Gegenüberliegend zur Abströmseite 4 der Trägerstruktur 2 ist eine Umlenkfläche 5 vorgesehen. Die Umlenkfläche 5 hat eine besonders gestaltete Form 8. Die Form 8 ist zumindest teilweise so ausgestaltet, dass sie zu einer Vergleichmäßigung der Abgasströmung führt. Die Form 8 der Umlenkfläche 5 kann beispielsweise Dellen 15 aufweisen, die Rückstauelemente 25 für die aus der Abströmseite 4 austretende Abgasströmung bilden. Gemäß der Fig. 2 ist eine Umlenkfläche 5 mit einer Delle 15 gezeigt. Die Fig. 3 zeigt eine Umlenkfläche 5 mit mehreren Dellen 15. Sowohl in Fig. 2 als auch in Fig. 3 jeweils gestrichelt angedeutet sind die ungestörten Verteilungen der Strömungsgeschwindigkeiten 7 dargestellt, die vorlägen, wenn keine Vergleichmäßigung der Strömung durch die jeweiligen Umlenkflächen 5 erfolgen würde. Im Bereich der Delle 15 hat die Umlenkfläche 5 einen Abstand 9 zur Abströmseite 4, der kleiner als 40 mm ist. An der Delle 15 entsteht so bei Durchströmung lokal ein Druckpolster, dass der angedeuteten, sonst herrschenden Verteilung der Strömungsgeschwindigkeiten 7 entgegenwirkt, so dass diese Verteilung vergleichmäßigt wird.

Die in den Fig. 2 und 3 dargestellten Abgasreinigungskomponenten 1 weisen jeweils einen Hinströmbereich 23 mit der Trägerstruktur 2 auf. Außen und konzentrisch um den Hinströmbereich 23 herum angeordnet, befindet sich ein Rückströmbereich 24. Die Form 8 der Umlenkfläche wird nur teilweise durch die Umlenkaufgabe des Umlenkbereichs 5 bestimmt. Die Form 8 ist auch so ausgestaltet, dass eine geeignete Umlenkung der Abgasströmung aus dem Hinströmbereich 23 in den Rückströmbereich 24 erfolgt. Im Rückströmbereich 24 können weitere Wabenkörper 21 angeordnet sein. Durch die erfindungsgemäße Ausgestaltung der Umlenkfläche 5 erfolgt auch eine gleichmäßige Anströmung dieser Wabenkörper 21. Aus dem Rückströmbereich 24 heraus kann das Abgas durch eine Ableitung 22 die erfindungsgemäße Abgasreinigungskomponente 1 wieder verlassen.

Fig. 4 zeigt ein Kraftfahrzeug 11, aufweisend eine Verbrennungskraftmaschine 12 sowie ein Abgassystem 13, aufweisend eine erfindungsgemäße Abgasreinigungskomponente.

Mit dem erfindungsgemäßen Verfahren und der erfindungsgemäßen Abgasreinigungskomponente ist eine besonders vorteilhafte Ausgestaltung und Herstellung eines Kompaktkatalysators möglich, durch welche ein Kompaktkatalysator weiter verkleinert werden kann und auch kostengünstiger herzustellen ist.

Bezugszeichenliste

| 1  | Abgasreinigungskomponente |
|----|----|
| 2  | Trägerstruktur |
| 3  | Einströmseite |
| 4  | Abströmseite |
| 5  | Umlenkfläche |
| 6  | Durchströmungsrichtung |
| 7  | Verteilung der Strömungsgeschwindigkeiten |
| 8  | Form |
| 9  | Abstand |
| 10 | Beschichtung |
| 11 | Kraftfahrzeug |
| 12 | Verbrennungskraftmaschine |
| 13 | Abgassystem |
| 14 | Winkel |
| 15 | Delle |
| 16 | Zuleitung |
| 17 | Hauptrichtung |
| 18 | Metallfolie |
| 19 | Kanal |
| 20 | Gehäuse |
| 21 | Wabenkörper |
| 22 | Ableitung |
| 23 | Hinströmbereich |
| 24 | Rückströmbereich |
| 25 | Rückstauelement |

**Patentansprüche**

1.  Verfahren zur Herstellung einer Abgasreinigungskomponente (1), aufweisend eine Trägerstruktur (2) mit einer Einströmseite (3), einer Abströmseite (4) und einer vorgegebenen Durchströmungsrichtung (6), einen konzentrisch zu der Trägerstruktur (2) angeordneten Rückströmbereich (24) sowie eine der Abströmseite (4) gegenüberliegend angeordnete Umlenkfläche (5), aufweisend zumindest die folgenden Schritte:

a) Bereitstellen der Trägerstruktur (2);

b) Beaufschlagen der Trägerstruktur (2) mit einem von der Einströmseite (3) zur Abströmseite (4) mit der vorgegebenen Durchströmungsrichtung (6) strömenden Abgas;

c) Ermitteln einer Verteilung der Strömungsgeschwindigkeiten (7) an der Abströmseite (4) der Trägerstruktur (2); und

d) Gestalten der Form (8) der Umlenkfläche (5) mit mindestens einem Rückstauelement (25) in Abhängigkeit der Verteilung der Strömungsgeschwindigkeiten (7) an der Abströmseite (4), so dass die Verteilung der Strömungsgeschwindigkeiten (7) vergleichmäßigt wird und eine Umlenkung des Abgases hin zum konzentrischen Rückströmbereich (24) erfolgt

wobei die Abgasreinigungskomponente (1) eine Zuleitung (16) mit einer Hauptrichtung (17) aufweist, und die Hauptrichtung (17) und die vorgegebene Durchströmungsrichtung (6) in einem Winkel (14) zueinander angeordnet sind, wobei in Schritt d) der Abstand (9) von Umlenkfläche (5) und Abströmseite (4) zueinander in Bereichen erhöhter Strömungsgeschwindigkeit auf weniger als 30 mm [Millimeter] reduziert wird und wobei in Schritt d) die Umlenkfläche (5) zumindest mit einer dezentralen und/oder multiplen Delle (15) ausgestaltet wird.

2. Verfahren nach Patentanspruch 1, wobei die Form (8) der Umlenkfläche (5) in Schritt d) bereichsweise im Wesentlichen spiegelbildlich zur Form der Verteilung der Strömungsgeschwindigkeiten (7) ausgestaltet wird.

3. Verfahren nach einem der vorhergehenden Patentansprüche, wobei die Einströmseite (3) der Trägerstruktur (2) in Schritt b) zumindest teilweise unter einem Winkel (14) schräg zur vorgegebenen Durchströmungsrichtung (6) angeströmt wird.

4. Verfahren nach einem der vorhergehenden Patentansprüche, wobei in Schritt d) die Umlenkfläche (5) derart ausgestaltet wird, dass eine die Abgasreinigungskomponente (1) mit darin angeordneter Umlenkfläche (5) durchströmende Abgasströmung einen Gleichmaß-Index (uniformity-index) von größer als 0.8 aufweist.

5. Abgasreinigungskomponente (1), aufweisend eine Trägerstruktur (2) mit einer Einströmseite (3), einer Abströmseite (4) und einer vorgegebenen Durchströmungsrichtung (6), einen konzentrisch zu der Trägerstruktur (2) angeordneten Rückströmbereich (24) sowie eine der Abströmseite (4) gegenüberliegend angeordnete Umlenkfläche (5) zur Umlenkung des Abgases hin zum konzentrischen Rückströmbereich (24), wobei die Umlenkfläche (5) derart ausgestaltet ist, dass eine die Abgasreinigungskomponente (1) mit darin angeordneter Umlenkfläche (5) durchströmende Abgasströmung einen Gleichmaß-Index (uniformity-index) von größer als 0,8 aufweist, wobei die Umlenkfläche (5) zumindest eine dezentrale und/oder multiple Delle (15) aufweist, wobei der Abstand (9) von Umlenkfläche (5) und Abströmseite (4) zueinander in Bereichen der Delle (15) auf weniger als 30 mm [Millimeter] reduziert ist und wobei die Abgasreinigungskomponente (1) eine Zuleitung (16) mit einer Hauptrichtung (17) aufweist, und die Hauptrichtung (17) und die vorgegebene Durchströmungsrichtung (6) in einem Winkel (14) zueinander angeordnet sind.

6. Kraftfahrzeug (11), aufweisend eine Verbrennungskraftmaschine (12) sowie ein Abgassystem (13) zur Reinigung der Abgase der Verbrennungskraftmaschine (12), wobei das Abgassystem (13) eine Abgasreinigungskomponente (1) nach Patentanspruch 5 oder eine nach einem der Patentansprüche 1 bis 4 hergestellte Abgasreinigungskomponente (1) aufweist.

## Claims

1. Method for producing an exhaust gas cleaning component (1) comprising a carrier structure (2) having an inflow side (3), an outflow side (4) and a predefined flow direction (6), a return flow region (24) arranged concentrically with the carrier structure (2) and with a deflection surface (5) arranged opposite the outflow side (4), comprising at least the following steps:

a) providing the carrier structure (2);

b) subjecting the carrier structure (2) to an exhaust gas flowing from the inflow side (3) to the outflow side (4) in the predefined flow direction (6);

c) determining a distribution of the flow velocities (7) on the outflow side (4) of the carrier structure (2); and

d) configuring the shape (8) of the deflection surface (5) with at least one backpressure element (25) in dependence on the distribution of the flow velocities (7) on the outflow side (4) so that the distribution of the flow velocities (7) is homogenized and a deflection of the exhaust gas towards the concentric return flow region (24) is effected;

wherein the exhaust gas cleaning component (1) has an inflow conduit (16) having a main direction (17), and the main direction (17) and the predefined flow direction (6) are arranged at an angle (14) to one another, wherein in step d) the distance (9) of deflection surface (5) and outflow side (4) from one another is reduced to less than 30 mm [millimeters] in regions of elevated flow velocity and wherein in step d) the deflection surface (5) is configured with at least one off-center and/or multiple dent (15).

2. Method according to claim 1, wherein in step d) the shape (8) of the deflection surface (5) is configured zonally to be substantially mirror-inverted with respect to the shape of the distribution of the flow velocities (7).

3. Method according to one of the preceding claims, wherein in step b) the flow impinges obliquely, at least partially, on the inflow side (3) of the carrier structure (2) at an angle (14) to the predefined flow direction (6).

4. Method according to one of the preceding claims, wherein in step d) the deflection surface (5) is configured in such a way that an exhaust gas flow passing through the exhaust gas cleaning component (1) with deflection surface (5) arranged therein has a uniformity index greater than 0.8.

5. Exhaust gas cleaning component (1), comprising a carrier structure (2) having an inflow side (3), an outflow side (4) and a predefined flow direction (6), a return flow region (24) arranged concentrically with the carrier structure (2) and with a deflection surface (5) arranged opposite the outflow side (4) for deflecting the exhaust gas towards the concentric return flow region (24), wherein the deflection surface (5) is configured in such a way that an exhaust gas flow passing through the exhaust gas cleaning component (1) with deflection surface (5) arranged therein has a uniformity index greater than 0.8, wherein the deflection surface (5) has at least one off-center and/or multiple dent (15), wherein the distance (9) of deflection surface (5) and outflow side (4) from one another is reduced to less than 30 mm [millimeters] in regions of the dent (15) and wherein the exhaust gas cleaning component (1) has an inflow conduit (16) having a main direction (17), and the main direction (17) and the predefined flow direction (6) are arranged at an angle (14) to one another.

6. Motor vehicle (11), having an internal combustion engine (12) and an exhaust system (13) for cleaning the exhaust gases of the internal combustion engine (12), wherein the exhaust system (13) has an exhaust gas cleaning component (1) according to claim 5 or an exhaust gas cleaning component (1) produced according to one of claims 1 to 4.

**Revendications**

1. Procédé de fabrication d'un composant d'épuration de gaz d'échappement (1), présentant une structure porteuse (2) dotée d'un côté d'afflux (3), d'un côté d'évacuation (4) et d'un sens d'écoulement prédéfini (6), une région de reflux (24) disposée concentriquement par rapport à la structure porteuse (2) ainsi qu'une surface de renvoi (5) disposée à l'opposé du côté d'évacuation (4), présentant au moins les étapes suivantes :

a) fourniture de la structure porteuse (2) ;
b) sollicitation de la structure porteuse (2) avec des gaz d'échappement s'écoulant depuis le côté d'afflux (3) vers le côté d'évacuation (4) dans le sens d'écoulement prédéfini (6) ;
c) détermination d'une répartition des vitesses d'écoulement (7) au niveau du côté d'évacuation (4) de la structure porteuse (2) ; et
d) configuration de la forme (8) de la surface de renvoi (5) avec au moins un élément de refoulement (25) en fonction de la répartition des vitesses d'écoulement (7) au niveau du côté d'évacuation (4), de telle sorte que la répartition des vitesses d'écoulement (7) soit régularisée et qu'il se produise un renvoi des gaz d'échappement vers la région de reflux concentrique (24) ;

le composant d'épuration de gaz d'échappement (1) présentant une conduite d'amenée (16) avec un sens principal (17), et le sens principal (17) et le sens d'écoulement prédéfini (6) étant disposés suivant un angle (14) l'un par rapport à l'autre, la distance (9) entre la surface de renvoi (5) et le côté d'évacuation (4), à l'étape d), dans des plages de plus haute vitesse d'écoulement, étant réduite à moins de 30 mm (millimètres) et la surface de renvoi (5), à l'étape d), étant configurée au moins avec un creux (15) décentré et/ou multiple.

2. Procédé selon la revendication 1, dans lequel la forme (8) de la surface de renvoi (5) à l'étape d) est configurée en partie essentiellement avec une symétrie spéculaire par rapport à la forme de la répartition des vitesses d'écoulement (7).

3. Procédé selon l'une quelconque des revendications précédentes, dans lequel le côté d'afflux (3) de la structure porteuse (2) à l'étape b) reçoit l'afflux au moins en partie suivant un angle (14) obliquement par rapport au sens d'écoulement prédéfini (6).

4. Procédé selon l'une quelconque des revendications précédentes, dans lequel, à l'étape d), la surface de renvoi (5) est configurée de telle sorte qu'un écoulement de gaz d'échappement s'écoulant à travers le composant d'épuration de gaz d'échappement (1), avec la surface de renvoi (5) disposée dans celui-ci, présente un indice d'uniformité (uniformity-index) supérieur à 0,8.

5. Composant d'épuration de gaz d'échappement (1) présentant une structure porteuse (2) dotée d'un côté d'afflux (3), d'un côté d'évacuation (4) et d'un sens d'écoulement prédéfini (6), une région de reflux (24) disposée concentriquement par rapport à la structure porteuse (2) ainsi qu'une surface de renvoi (5) disposée à l'opposé du côté d'évacuation (4), pour renvoyer les gaz d'échappement vers la région de reflux concentrique (24), la surface de renvoi (5) étant configurée de telle sorte qu'un écoulement de gaz d'échappement s'écoulant à travers le composant d'épuration de gaz d'échappement (1), avec la surface de renvoi (5) disposée dans celui-ci, présente un indice d'uniformité (uniformity-index) supérieur à 0,8, la surface de renvoi (5) présentant au moins un creux (15) décentré et/ou multiple, la distance (9) entre la surface de renvoi (5) et le côté d'évacuation (4), dans des régions du creux (15), étant réduite à moins de 30 mm (millimètres) et le composant d'épuration de gaz d'échappement (1) présentant une conduite d'amenée (16) avec un sens principal (17), et le sens principal (17) et le sens d'écoulement prédéfini (6) étant disposés suivant un angle (14) l'un par rapport à l'autre.

6. Véhicule automobile (11), présentant un moteur à combustion interne (12) ainsi qu'un système de gaz d'échappement (13) pour épurer les gaz d'échappement du moteur à combustion interne (12), le système de gaz d'échappement (13) présentant un composant d'épuration de gaz d'échappement (1) selon la revendication 5 ou un composant d'épuration de gaz d'échappement (1) fabriqué selon l'une quelconque des revendications 1 à 4.

**Fig. 1**

**Fig. 2**

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 05001252 A1
- DE 19518536 A1